(19) **Europäisches Patentamt European Patent Office Office européen des brevets**

(11) **EP 4 496 210 A1**

(12) **EUROPEAN PATENT APPLICATION**
published in accordance with Art. 153(4) EPC

(43) Date of publication:
**22.01.2025 Bulletin 2025/04**

(21) Application number: **22932068.4**

(22) Date of filing: **16.03.2022**

(51) International Patent Classification (IPC):
*H02P 23/04* (2006.01)

(52) Cooperative Patent Classification (CPC):
**H02P 23/04**

(86) International application number:
**PCT/JP2022/012011**

(87) International publication number:
**WO 2023/175789 (21.09.2023 Gazette 2023/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **JTEKT Corporation**
**Kariya-shi, Aichi 448-8652 (JP)**

(72) Inventors:
- **TAMAIZUMI, Terutaka**
  **Kariya-shi, Aichi 448-8652 (JP)**
- **LIN, Yufeng**
  **Kariya-shi, Aichi 448-8652 (JP)**

- **INDEN, Yuki**
  **Kariya-shi, Aichi 448-8652 (JP)**
- **ABD RAHIM, Muhammad Iqmal**
  **Kariya-shi, Aichi 448-8652 (JP)**
- **SAKAI, Atsuo**
  **Kariya-shi, Aichi 448-8652 (JP)**
- **ITAMOTO, Hidenori**
  **Kariya-shi, Aichi 448-8652 (JP)**
- **TSUJII, Shunsuke**
  **Kariya-shi, Aichi 448-8652 (JP)**

(74) Representative: **Winter, Brandl - Partnerschaft mbB**
**Alois-Steinecker-Straße 22**
**85354 Freising (DE)**

(54) **MOTOR CONTROL DEVICE**

(57)     A motor control device (11) includes a command value calculation unit (31) that calculates a command value (I*) for controlling a motor (12), and a disturbance observer unit (33) for estimating a disturbance ($T_{ld}$) applied to a mechanical device (13), based on the command value (I*) and rotation information ($\omega_m$) of the motor (12), and to correct the command value (I*) based on the disturbance ($T_{ld}$) that is estimated. The disturbance observer unit (33) has parameters (L1, β) that are adjusted to compensate for effects of the disturbance ($T_{ld}$) having a specific frequency that is an object of suppression. The parameters (L1, β) are adjusted such that a disturbance ($T_{last}$), applied to the mechanical device (13) after effects of the disturbance ($T_{ld}$) are compensated for, has frequency characteristics corresponding to antiresonance characteristics of the mechanical device (13). The disturbance observer unit (33) is configured to change the values of the parameters (β, L1, L2) in accordance with the rotation information of the motor (12).

Fig.2

**Description**

TECHNICAL FIELD

The present invention relates to a motor control device.

BACKGROUND ART

There conventionally is an electric power steering system. The electric power steering system (hereinafter referred to as "EPS") assists steering by a steering wheel, by applying torque from a motor to a steering mechanism. A control device of the EPS calculates a target current value according to steering torque applied to the steering wheel, and controls power feeding to the motor, based on the target current value that is calculated. Thus, the motor generates torque corresponding to the steering torque.

In EPSs, vibrations generated due to torque ripple of the motor or reduction gear are readily conveyed to the steering wheel. Accordingly, torque differential control, such as described in Patent Document 1, for example, is performed. The control device calculates a torque differential value by differentiation of the steering torque detected by a torque sensor, and corrects the target current value in accordance with the torque differential value that is calculated. This suppresses vibrations due to torque ripple.

Related Art Documents

Patent Documents

Patent Document 1: Japanese Unexamined Patent Application Publication No. 2004-224129 (JP 2004-224129 A)

SUMMARY OF THE INVENTION

Problem to be Solved by the Invention

Executing torque differential control certainly does enable suppression of vibrations due to torque ripple. However, torque differential control may not be able to suppress vibrations due to torque ripple to a required level. Accordingly, there is demand to more appropriately suppress vibrations due to torque ripple. Also, motors are used as drive sources not only for electric power steering systems but also for various types of mechanical devices. There also is demand to reduce vibrations due to torque ripple in the motors of these mechanical devices as well.

Means for Solving the Problem

A motor control device according to an aspect of the present disclosure controls a motor of a mechanical device. The motor control device includes a command value calculation unit configured to calculate a command value for controlling the motor, and a disturbance observer unit configured to estimate a disturbance applied to the mechanical device, based on the command value and rotation information of the motor, and to correct the command value based on the disturbance that is estimated. The disturbance observer unit has a parameter that is adjusted to compensate for effects of the disturbance having a specific frequency that is an object of suppression. The disturbance that is applied to the mechanical device, after the effects of the disturbance have been compensated for, is a post-compensation disturbance, the parameter is adjusted such that the disturbance following compensation of the disturbance has frequency characteristics corresponding to antiresonance characteristics of the mechanical device. The disturbance observer unit is configured to change a value of the parameter in accordance with the rotation information of the motor.

BRIEF DESCRIPTION OF THE DRAWINGS

[FIG. 1] FIG. 1 is a configuration diagram of an embodiment of a motor control device.
[FIG. 2] FIG. 2 is a block diagram of the motor control device in FIG. 1.
[FIG. 3] FIG. 3 is a graph showing frequency characteristics of disturbance.

MODES FOR CARRYING OUT THE INVENTION

<First Embodiment>

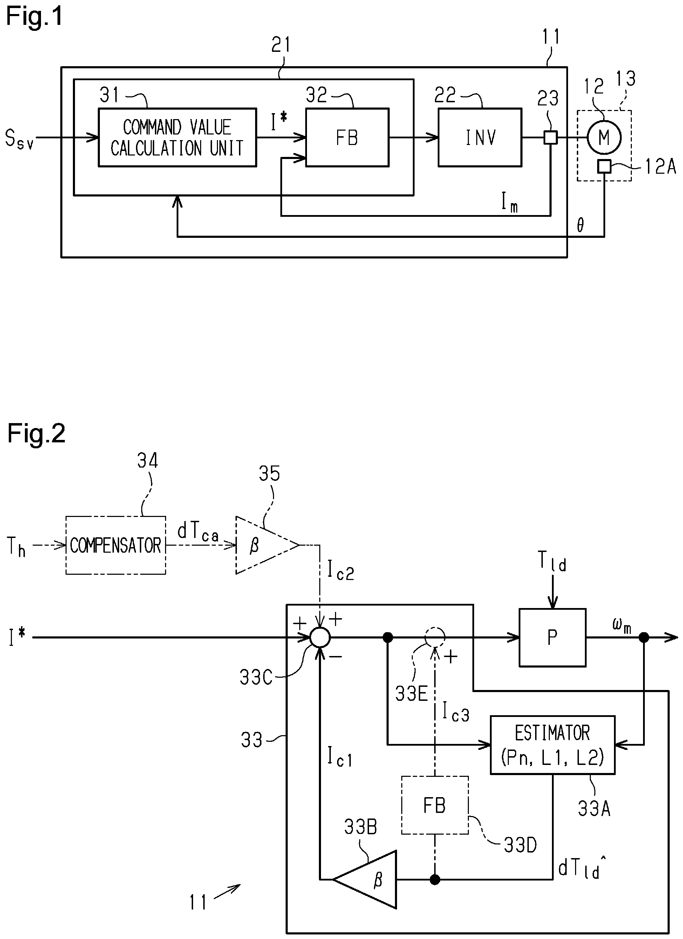

A motor control device 11 according to a first embodiment will be described. As illustrated in FIG. 1, the motor control device 11 controls a motor 12. The motor 12 generates torque for driving a mechanical device 13 in which the motor 12 is to be installed. The motor 12 is, for example, a three-phase brushless motor. The motor 12 has a rotation angle sensor 12A. The rotation angle sensor 12A detects a rotation angle $\theta$ of the motor 12. The rotation angle $\theta$ of the motor 12 is rotation information of the motor 12.

The motor control device 11 has a microcomputer 21, an inverter 22, and a current sensor 23. The microcomputer 21, which is a processing circuit, has a command value calculation unit 31 and a feedback calculation unit 32. These calculation units are functional parts realized by a CPU (central processing unit) of the microcomputer 21 executing a control program. The microcomputer 21 includes memory that stores the control program. The memory includes computer-readable media such as RAM (Random Access Memory) and ROM (Read Only Memory). However, each calculation unit being realized by software is only an example, and at least part of the calculation units may be realized by a hardware circuit such as a logic circuit.

The command value calculation unit 31 calculates a current command value I* for the motor 12 based on a state variable Ssv indicating a state of the mechanical device 13, for example. The feedback calculation unit 32 calculates a difference between the current command value I* calculated by the command value calculation unit 31 and a value of a current Im of the motor 12 detected by way of the current sensor 23. The feedback calculation unit 32 generates a drive signal for the inverter 22 so as to eliminate the difference between the current command value I* and the value of the current Im of the motor 12.

The inverter 22 operates based on the drive signal generated by the feedback calculation unit 32. The inverter 22 has a plurality of switching elements. By switching these switching elements based on the drive signal, electric power in accordance with the current command value I* is generated. The electric power generated by the inverter 22 is supplied to the motor 12 via a power supply path made up of a bus bar, a cable, or the like. Thus, the motor 12 generates torque corresponding to the current command value I*.

<Disturbance Observer>

As illustrated in the block diagram of FIG. 2, the motor control device 11 has a disturbance observer unit 33. The disturbance observer unit 33 is provided to estimate a disturbance $T_{ld}$ that is applied to a plant P, which is an object of control, and to compensate for effects of the disturbance $T_{ld}$. Compensation for the effects of disturbance refers to reducing the effects of disturbance by taking into account characteristics of the disturbance when controlling a system that is subject to disturbance. The disturbance $T_{ld}$ is nonlinear torque. The disturbance $T_{ld}$ is, for example, torque ripple of the motor 12. Torque ripple is a disturbance that occurs periodically as the motor 12 rotates.

A control system for the motor 12 is a feedback control system that determines the current command value I* for the motor 12 based on the state variable Ssv of the mechanical device 13. Supplying current from the inverter 22 to the motor 12 in accordance with the current command value I* rotates the motor 12 at a predetermined angular velocity $\omega_m$. Accordingly, a range from the current command value I* for the motor 12, to the angular velocity $\omega_m$ of the motor 12, is an object of control in the feedback control system. The angular velocity $\omega_m$ of the motor 12 is the rotation information of the motor 12. The plant P includes the mechanical device 13.

In a case in which an inertial number of the mechanical device 13 is "1", and the mechanical device 13 and the motor 12 are regarded as being connected via an elastic element, the object of control can be regarded as being a two-inertial system in which two moments of inertia are connected by the elastic element. In this case, the object of control has frequency characteristics that include one set of resonance characteristics and antiresonance characteristics.

Also, in a case in which the inertial number of the mechanical device 13 is "2", and the mechanical device 13 and the motor 12 are regarded as being connected via an elastic element, the object of control can be regarded as being a three-inertial system in which three moments of inertia are connected by the elastic element. In this case, the object of control has frequency characteristics that include two sets of resonance characteristics and antiresonance characteristics.

The disturbance observer unit 33 takes in the current command value I*, which is a target value of the plant P, and output of the plant P. An example of the output of the plant P is the angular velocity $\omega_m$ of the motor 12. The angular velocity $\omega_m$ is obtained by differentiation of the rotation angle $\theta$ of the motor 12 that is detected by the rotation angle sensor 12A. The disturbance observer unit 33 estimates the disturbance $T_{ld}$ based on the current command value I* and the angular velocity $\omega_m$ of the motor 12. The disturbance observer unit 33 calculates a first correction value $I_{c1}$ for canceling out the disturbance $T_{ld}$ having a frequency that is an object of suppression.

The disturbance observer unit 33 has an estimator 33A, a multiplier 33B, and a subtractor 33C. The disturbance observer unit 33 may be made up of a hardware circuit, such as a logic circuit. The disturbance observer unit 33 is also referred to as a disturbance observer circuit. Also, the disturbance observer unit 33 may be a functional part realized by a CPU of a computer executing a control program.

The estimator 33A has a nominal plant Pn, a first observer gain L1, and a second observer gain L2. The nominal plant Pn is a model simulating the plant P that is the object of control. The estimator 33A calculates difference $\Delta\omega$ between the angular velocity $\omega_m$ of the motor 12 obtained as the output of the plant P and estimated angular velocity $\omega_m{}^\wedge$ of the motor 12 obtained as output of the nominal plant Pn, as shown in the following Expression (1). "^" indicates an estimated value.

$$\Delta\omega = \omega_m - \omega_m{}^\wedge \ \dots (1)$$

The estimator 33A multiplies the value of the difference $\Delta\omega$ between the angular velocity $\omega_m$ of the motor 12 and the estimated angular velocity $\omega_m{}^\wedge$ of the motor 12 by the second observer gain L2, as shown in the following Expression (2), thereby calculating a differential value $dT_{ld}{}^\wedge$ of an estimated disturbance $T_{ld}{}^\wedge$.

$$dT_{ld}{}^\wedge = \Delta\omega \ \cdot \ L2 \ \dots (2)$$

Note that the estimator 33A calculates the estimated disturbance $T_{ld}{}^\wedge$ by integration of the differential value $dT_{ld}{}^\wedge$ of the estimated disturbance $T_{ld}{}^\wedge$. The nominal plant Pn calculates an estimated value $\omega_m{}^\wedge$ of the angular velocity $\omega_m$ using the estimated disturbance $T_{ld}{}^\wedge$, a value obtained by multiplying the value of the difference $\Delta\omega$ by the first observer gain L1, and a viscosity coefficient C of the motor 12.

The multiplier 33B calculates the first correction value $I_{c1}$ by multiplying the differential value $dT_{ld}{}^\wedge$ of the estimated disturbance $T_{ld}{}^\wedge$ calculated by the estimator 33A, by a gain $\beta$. The first correction value $I_{c1}$ is a current value for canceling out vibration due to the disturbance $T_{ld}$.

The subtractor 33C subtracts the first correction value $I_{c1}$ from the current command value I* to calculate a current command value I* in which the effects of the disturbance $T_{ld}$ have been compensated for. The disturbance $T_{ld}$ that is applied to the mechanical device 13 after the effects of the disturbance $T_{ld}$ have been compensated for by the disturbance observer unit 33 is referred to as post-compensation disturbance $T_{last}$.

The post-compensation disturbance $T_{last}$ is expressed by the following Expression (3).

$$T_{last} = T_{ld} - \beta \cdot dT_{ld}{}^\wedge = \{Js^2 + (-L2 \cdot \beta + L1 \cdot J)s + L2\} \cdot T_{ld}/\{Js^2 + (-L2 \cdot C + L1 \cdot J)s + L2\} \cdot Js \qquad (3)$$

where "J" is a coefficient of inertia in which a moment of inertia of the mechanical device 13 is modeled. "C" is a viscosity coefficient that models the friction of the mechanical device 13. "s" is a Laplace operator. "L1" is the first observer gain. "L2" is the second observer gain. "$\beta$" is gain.

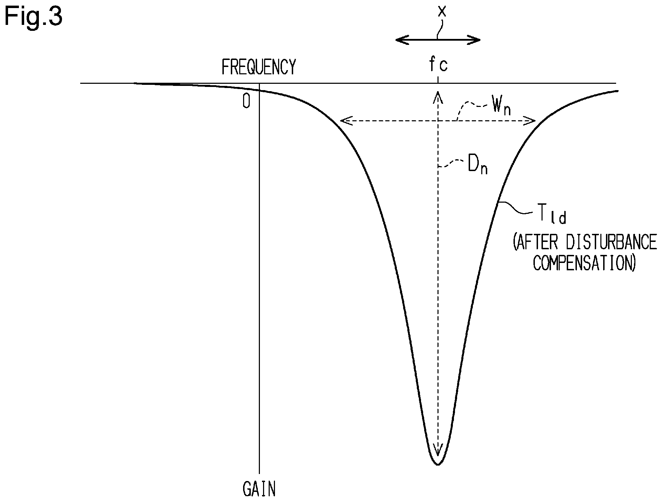

As shown in the graph of FIG. 3, the post-compensation disturbance $T_{last}$ has a notch, which is a spike-like drop, in frequency characteristics thereof. The post-compensation disturbance $T_{last}$ has frequency characteristics corresponding to the antiresonance characteristics of the plant P.

The first observer gain L1 is expressed by the following Expression (4).

$$L1 = 2 \ \cdot \ \omega \ \cdot \ \alpha \ \dots (4)$$

where "$\omega$" is frequency. "$\alpha$" is a first parameter.

The second observer gain L2 is expressed by the following Expression (5).

$$L2 = J \ \cdot \ \omega^2 \ \dots (5)$$

where "J" is the coefficient of inertia in which the moment of inertia of the mechanical device 13 is modeled. "w" is frequency.

The gain $\beta$ is expressed by the following Expression (6).

$$\beta = \alpha/\omega \ \cdot \ 2 \ \cdot \ \gamma \ \dots (6)$$

where "$\alpha$" is a first parameter, "$\omega$" is frequency, and "$\gamma$" is a second parameter. The second parameter $\gamma$ is a value of "1" or less, and can be set, for example, in steps of "0.1".

A value of frequency w is set to the frequency of the disturbance $T_{ld}$ to be suppressed. The frequency of the disturbance $T_{ld}$ to be suppressed is, for example, a center frequency $f_c$ of a notch in the disturbance $T_{ld}$.

Further, adjusting the value of the first observer gain L1 enables a width $W_n$ of the notch in the disturbance $T_{ld}$ to be adjusted. Adjusting the value of the first parameter $\alpha$ in Expression (4) enables the value of the first observer gain L1 to be adjusted.

Also, adjusting the value of the gain $\beta$ enables a depth $D_n$ of the notch in the disturbance $T_{ld}$ to be adjusted. Adjusting the value of the second parameter $\gamma$ in Expression (6) enables the value of the gain $\beta$ to be adjusted.

The first observer gain L1 and the gain $\beta$ are parameters that are adjusted to suppress vibrations due to the disturbance $T_{ld}$ having a specific frequency that is the object of suppression. Adjusting the value of the first observer gain L1 and the value of the gain $\beta$ enables a conveyance rate of the disturbance $T_{ld}$ to the plant P to be adjusted. The value of the first observer gain L1 and the value of the gain $\beta$ are adjusted so that the post-compensation disturbance $T_{last}$ has frequency characteristics corresponding to the antiresonance characteristics of the plant P. Inputting the post-compensation disturbance $T_{last}$ having frequency characteristics corresponding to the antiresonance characteristics of the plant P into the plant P theoretically enables amplitude of vibrations of the mechanical device 13 due to the disturbance $T_{ld}$ having the specific frequency that is the object of suppression to be set to "0".

Substituting Expressions (4), (5), and (6) into the above Expression (3) yields the following Expression (7).

$$T_{last} = \{s^2 + 2 \cdot \omega \cdot \alpha \cdot (1 - \gamma) \cdot s + \omega^2\} \cdot T_{ld}/\{s^2 + 2 \cdot \omega \cdot \alpha \cdot s + \omega^2\} \ldots (7)$$

When the value of the second term "$2 \cdot \omega \cdot \alpha \cdot (1 - \gamma) \cdot s$" in the curly brackets in the numerator of Expression (7) is "0", the conveyance rate of the disturbance $T_{ld}$ having the specific frequency that is the object of suppression with respect to the plant P becomes "0". Accordingly, setting the value of the second parameter $\gamma$ to "1" enables the vibrations due to the disturbance $T_{ld}$ having the specific frequency that is the object of suppression to be cancelled out. Also, adjusting the value of the second parameter $\gamma$ between "0 to 1" in steps of "0.1", for example, enables the conveyance rate of the disturbance $T_{ld}$ having the specific frequency that is the object of suppression with respect to the plant P to be adjusted. The smaller the value of the second term "$2 \cdot \omega \cdot \alpha \cdot (1 - \gamma) \cdot s$" in the curly brackets in the numerator of Expression (7) becomes, the smaller the conveyance rate of the disturbance $T_{ld}$ having the specific frequency that is the object of suppression with respect to the plant P becomes.

Note that the second term in the curly brackets in the numerator of Expression (7), "$2 \cdot \omega \cdot \alpha \cdot (1 - \gamma) \cdot s$", corresponds to the second term in the curly brackets in the numerator of Expression (3), "$(- L2 \cdot \beta + L1 \cdot J) s$". To adjust the value of the second parameter $\gamma$ is also to adjust the value of the gain $\beta$.

<Change in Frequency of Disturbance $T_{ld}$ >

The motor control device 11 can compensate for effects of disturbance $T_{ld}$ having a particular frequency. However, there are the following concerns regarding the motor control device 11.

That is to say, change in the angular velocity $\omega_m$ of the motor 12 may cause change in the frequency of the disturbance $T_{ld}$. Accordingly, in a case in which parameter values of the disturbance observer unit 33 are fixed to values specific to a particular frequency, there is a concern that the effects of the disturbance $T_{ld}$ cannot be compensated for as appropriate. The parameters are the gain $\beta$, the first observer gain L1, and the second observer gain L2.

Accordingly, the disturbance observer unit 33 changes the value of the gain $\beta$, the value of the first observer gain L1, and the value of the second observer gain L2, in accordance with the change in the angular velocity $\omega_m$ of the motor 12, and hence in accordance with the change in the frequency of the disturbance $T_{ld}$. In this case, the gain $\beta$ is expressed by the following Expression (8). The first observer gain L1 is expressed by the following Expression (9). The second observer gain L2 is expressed by the following Expression (10).

$$\beta = \alpha/\omega(t) \cdot 2 \cdot \gamma \ldots (8)$$

$$L1 = 2 \cdot \omega(t) \cdot \alpha \ldots (9)$$

$$L2 = J \cdot \omega(t)^2 \ldots (10)$$

where "t" is time. "w(t)" is the frequency at time t, which may vary over time. "$\alpha$" is the first parameter. "$\gamma$" is the second parameter. "J" is the coefficient of inertia in which the moment of inertia of the mechanical device 13 is modeled.

The following can be understood from Expression (8) to Expression (10). That is to say, change in the angular velocity $\omega_m$ of the motor 12 causes change in the value of the frequency w(t). When the value of the frequency w(t) changes, the value of the gain $\beta$, the value of the first observer gain L1, and the value of the second observer gain L2 change in accordance with the change. In this way, the values of the parameters ($\beta$, L1, L2) of the disturbance observer unit 33 change in accordance with the change in the angular velocity $\omega_m$ of the motor 12.

The disturbance observer unit 33 has a function of calculating the frequency of the disturbance $T_{ld}$ based on the angular velocity $\omega_m$ of the motor 12. There is a correlative relation between the angular velocity $\omega_m$ of the motor 12 and the frequency of the disturbance $T_{ld}$. The disturbance observer unit 33 calculates the frequency of the disturbance $T_{ld}$ corresponding to the angular velocity $\omega_m$ of the motor 12 based on the correlative relation between the angular velocity $\omega_m$ of the motor 12 and the frequency of the disturbance $T_{ld}$. The disturbance observer unit 33 stores, for example, a map that defines the relation between the angular velocity $\omega_m$ of the motor 12 and the frequency of the disturbance $T_{ld}$. The disturbance observer unit 33 uses the map to calculate the frequency of the disturbance $T_{ld}$ corresponding to the angular velocity $\omega_m$ of the motor 12.

The estimator 33A uses the frequency of the disturbance $T_{ld}$, which is calculated, to set the value of the first observer gain L1 and the value of the second observer gain L2. The estimator 33A calculates the differential value $dT_{ld}{}^{\wedge}$ of the estimated disturbance $T_{ld}{}^{\wedge}$ by using the first observer gain L1 and the second observer gain L2 having values according to the frequency of the disturbance $T_{ld}$ that is calculated.

The multiplier 33B sets the value of the gain $\beta$ using the frequency of the disturbance $T_{ld}$ that is calculated. The multiplier 33B multiplies the differential value $dT_{ld}{}^{\wedge}$ of the estimated disturbance $T_{ld}{}^{\wedge}$ calculated by the estimator 33A by gain $\beta$ having a value in accordance with the frequency of the disturbance $T_{ld}$ that is calculated, thereby calculating the first correction value $I_{c1}$.

In this way, the disturbance observer unit 33 calculates the frequency of the disturbance $T_{ld}$ which changes in accordance with the change in the angular velocity $\omega_m$ of the motor 12. Also, the disturbance observer unit 33 changes the value of the gain $\beta$, the value of the first observer gain L1, and the value of the second observer gain L2 in accordance with the change in the frequency of the disturbance $T_{ld}$. This enables compensation for the effects of the disturbance $T_{ld}$ over a broader frequency range. That is to say, as indicated by the arrow X in the graph in FIG. 3, even when the center frequency $f_c$ of the disturbance $T_{ld}$ to be eliminated fluctuates, the disturbance $T_{ld}$ having the center frequency $f_c$ that is fluctuating can be eliminated with pinpoint precision.

However, in a case in which the parameter values of the disturbance observer unit 33 are changed in accordance with change in the frequency of the disturbance $T_{ld}$, a situation may arise in which other concerns than the disturbance $T_{ld}$ arise. This situation is, for example, a situation in which the angular velocity $\omega_m$ of the motor 12 is slower and the amount of change in the angular velocity $\omega_m$ of the motor 12 per unit time is greater. Under this situation, there is concern that torque fluctuations of the motor 12 other than those suppressing the disturbance $T_{ld}$ will occur, due to changing the parameter values of the disturbance observer unit 33 in accordance with change in the frequency of the disturbance $T_{ld}$.

Accordingly, in order to suppress torque fluctuations of the motor 12 due to change in the parameter values of the disturbance observer unit 33 in accordance with change in the frequency of the disturbance $T_{ld}$, the first observer gain L1 may be set as in the following Expression (11).

$$L1 = 2 \cdot \omega(t) \cdot \alpha - (d\omega(t)/dt)/\omega(t) \ \dots \ (11)$$

The second term on the right side of Expression (11), which is "(dw(t)/dt)/w(t)", is a correction term for the first observer gain L1. The correction term is set based on the perspective of suppressing torque fluctuation of the motor 12 due to change in the parameter value of the disturbance observer unit 33 in accordance with change in the frequency of the disturbance $T_{ld}$. When the frequency of the disturbance $T_{ld}$ does not change, i.e., when the angular velocity $\omega_m$ of the motor 12 is constant, the value of the correction term is "0". When the frequency of the disturbance $T_{ld}$ changes, i.e., when the angular velocity $\omega_m$ of the motor 12 changes, the correction term becomes a value other than "0", thereby correcting the value of the first observer gain L1.

In this way, the disturbance observer unit 33 corrects the value of the first observer gain L1 in accordance with change in the frequency of the disturbance $T_{ld}$ in conjunction with change in the angular velocity $\omega_m$ of the motor 12. This enables torque fluctuation of the motor 12 other than for suppressing the disturbance $T_{ld}$, due to changing the parameter values of the disturbance observer unit 33 in accordance with change in the frequency of the disturbance $T_{ld}$, to be suppressed. Accordingly, even when the parameter values of the disturbance observer unit 33 are changed in accordance with change in the frequency of the disturbance $T_{ld}$, the effects of the disturbance $T_{ld}$ can be compensated for as appropriate.

<Effects of First Embodiment>

The first embodiment has the following effects.

(1-1) The disturbance observer unit 33 estimates the disturbance $T_{ld}$ using the nominal plant Pn that is a model simulating the plant P, and corrects the current command value I* based on the disturbance $T_{ld}$ that is estimated. The disturbance observer unit 33 has parameters that are adjusted to suppress vibrations due to the disturbance $T_{ld}$ having the specific frequency that is the object of suppression. Adjusting these parameters enables compensating just for the effects of the disturbance $T_{ld}$ having the specific frequency that is the object of suppression. The parameters are adjusted such that the post-compensation disturbance $T_{last}$ has frequency characteristics corresponding to the antiresonance characteristics of the plant P. Inputting the post-compensation disturbance $T_{last}$ that has frequency characteristics corresponding to the antiresonance characteristics of the plant P to the plant P enables vibrations occurring in the plant P to be suppressed or to be canceled out.

(1-2) The disturbance observer unit 33 estimates the disturbance $T_{ld}$ applied to the mechanical device 13 based on the current command value I* and the angular velocity $\omega_m$ of the motor 12. Unlike in the case in which the rotation angle $\theta$ of the motor 12 is used, there is no need to calculate the midpoint of the motor 12. The midpoint of the motor 12 is the rotation angle $\theta$ of the motor 12 corresponding to the reference operating state of the mechanical device 13. Accordingly, the motor control device 11 does not need to have a function of calculating the midpoint of the motor 12.

(1-3) The disturbance observer unit 33 calculates the first correction value $I_{c1}$ for the current command value I* by multiplying the differential value $dT_{ld}\hat{}$ of the estimated disturbance $T_{ld}\hat{}$ by the gain $\beta$. Multiplying the differential value $dT_{ld}\hat{}$ by the gain $\beta$ is all that is necessary, and accordingly the first correction value $I_{c1}$ can be easily calculated.

(1-4) The post-compensation disturbance $T_{last}$ that is applied to the plant P after the effects of the disturbance $T_{ld}$ have been compensated for has conveyance characteristics expressed by the following Expression (A). This is based on Expression (3) above.

$$\{Js^2 + (-L2 \cdot \beta + L1 \cdot J) s + L2\}/\{Js^2 + (-L2 \cdot C + L1 \cdot J) s + L2\} \cdot Js \ ... \ (A)$$

When the value of the second term "(-L2 · $\beta$ + L1 · J) s" in the numerator of Expression (A) is "0", the conveyance rate of the disturbance $T_{ld}$ to the plant P theoretically becomes "0". Accordingly, the value of the gain $\beta$ of the disturbance observer unit 33 is adjusted such that the value of the second term of the numerator of Expression (A) becomes "0" or a value closer to "0". Adjusting the value of the gain $\beta$ enables the disturbance $T_{ld}$ to be suppressed more appropriately.

(1-5) The disturbance observer unit 33 changes the value of the gain $\beta$, the value of the first observer gain L1, and the value of the second observer gain L2, in accordance with the change in the angular velocity $\omega_m$ of the motor 12, and hence in accordance with the change in the frequency of the disturbance $T_{ld}$. This enables compensation for the effects of the disturbance $T_{ld}$ over a broader frequency range. That is to say, even when the center frequency $f_c$ of the disturbance $T_{ld}$ to be eliminated fluctuates, the disturbance $T_{ld}$ having the center frequency $f_c$ that is fluctuating can be eliminated with pinpoint precision.

(1-6) When the angular velocity $\omega_m$ of the motor 12 changes, the disturbance observer unit 33 corrects the value of the first observer gain L1 in order to suppress torque fluctuations of the motor 12 due to change in the parameter values. The disturbance observer unit 33 corrects the value of the first observer gain L1 in accordance with change in the frequency of the disturbance $T_{ld}$ in conjunction with change in the angular velocity $\omega_m$ of the motor 12. This enables torque fluctuation of the motor 12 other than for suppressing the disturbance $T_{ld}$, due to changing the parameter values of the disturbance observer unit 33 in accordance with change in the frequency of the disturbance $T_{ld}$, to be suppressed. Accordingly, even when the parameter values of the disturbance observer unit 33 are changed in accordance with change in the frequency of the disturbance $T_{ld}$, the effects of the disturbance $T_{ld}$ can be compensated for as appropriate.

<Second Embodiment>

The motor control device 11 according to a second embodiment will be described. The present embodiment basically has the same configuration as that of the first embodiment in FIG. 1 to FIG. 3 described above. Accordingly, members and configurations that are the same as those in the first embodiment will be denoted by the same signs as those therein, and detailed description thereof will be omitted.

The mechanical device 13 may be an electric power steering system. In this case, the motor 12 is an assisting motor. The assisting motor generates assisting torque that is applied to the steering mechanism of the vehicle. The assisting torque is a torque for assisting steering by the steering wheel. The steering mechanism includes a steering shaft connected to steering wheels, and a turning shaft that steers the steered wheels of the vehicle. The assisting torque is applied to the steering shaft or the turning shaft. The command value calculation unit 31 calculates the current command value I* for the assisting motor, in accordance with steering torque $T_h$ detected by a torque sensor. The steering torque $T_h$ is torque applied to the steering wheel. The steering torque $T_h$ is a state variable Ssv indicating a steering state of the steering system.

The mechanical device 13 may be a steer-by-wire steering system. In this case, the motor 12 is a reaction force motor or a steering motor. The reaction force motor generates a steering reaction torque that is applied to the steering shaft of the vehicle. The steering reaction torque is a torque in an opposite direction of a steering direction of the steering wheel. The command value calculation unit 31 calculates the current command value I* for the reaction force motor, in accordance with the steering torque $T_h$ detected by the torque sensor. The steering motor generates steering torque for steering the steered wheels of the vehicle. The command value calculation unit 31 calculates the current command value I* for the steering motor in accordance with a steering angle of the steering wheel. The steering angle is calculated, for example, based on the rotation angle $\theta$ of the motor 12 detected by the rotation angle sensor 12A. The steering torque $T_h$ and the steering angle are the state variable Ssv indicating the steering state of the steering system.

In a case in which the motor 12 is an assist motor or a reaction motor, the motor control device 11 may be configured as follows.

That is to say, as indicated by the long dashed double-short dashed line in FIG. 2, the motor control device 11 has a compensator 34 and a multiplier 35. The compensator 34 calculates a torque differential value by differentiation of the steering torque $T_h$ detected by the torque sensor, and calculates a compensation amount $dT_{ca}$ for compensating for the effects of the disturbance $T_{ld}$ in accordance with the torque differential value that is calculated. The multiplier 35 calculates a second correction value $I_{c2}$ by multiplying the compensation amount $dT_{ca}$ by the gain $\beta$. The second correction value $I_{c2}$ is a current value. The subtractor 33C adds the second correction value $I_{c2}$ to the current command value I\*. This increases responsivity of the motor torque as to changes in the steering torque $T_h$. Thus, a smoother steering feel can be obtained. Also, advantages of suppressing disturbances, such as reverse input vibration from the steered wheels, brake vibrations generated due to brake operations, or the like, can also be obtained.

The compensator 34 is expressed by the following Expression (12). Expression (12) is a second-order differential equation.

$$\alpha_2(t) \cdot \{(\sigma^2/\sigma t^2) \cdot x_0(t)\} + \alpha_1(t) \cdot \{(\sigma/\sigma t) \cdot x_0(t)\} + \alpha_0(t)^2 \cdot x_0(t) = T_d(t) \ ... \ (12)$$

where "$\alpha_2$" is a first coefficient. The first coefficient is a coefficient of the second-order differential term, which is the first term on the left side of Expression (12). "$\alpha_1$" is a second coefficient. The second coefficient is a coefficient of the first-order differential term, which is the second term on the left side of Expression (12). "$\alpha_0$" is a third coefficient. "t" is time. "$x_0(t)$" is the input to the compensator 34, which is the steering torque $T_h$ here. "$T_d$" is the output of the compensator 34, which is the compensation amount $dt_{ca}$ here.

In order to accommodate change in the frequency of the disturbance $T_{ld}$ in conjunction with change in the angular velocity $\omega_m$ of the motor 12, the first coefficient $\alpha_2$, the second coefficient $\alpha_1$, and the third coefficient $\alpha_0$ are set as expressed by the following Expressions (13) to (15).

$$\alpha_2(t) = 1/\omega(t)^2 \ ... \ (13)$$

$$\alpha_1(t) = 2 \cdot \alpha/\omega(t) \ ... \ (14)$$

$$\alpha_0(t) = 1 \ ... \ (15)$$

where "t" is time. "w(t)" is the frequency at time t, which may vary over time. "$\alpha$" is the first parameter.

When the value of the frequency $\omega(t)$ of the disturbance $T_{ld}$ changes in accordance with change in the angular velocity $\omega_m$ of the motor 12, the value of the first coefficient $\alpha_2$ and the value of the second coefficient $\alpha_1$ change in accordance with the change. This enables the compensator 34 to perform compensation for the effects of disturbance $T_{ld}$ over a broader frequency range.

However, there is a concern that, due to changing the value of the first coefficient $\alpha_2$ and the value of the second coefficient $\alpha_1$ in accordance with change in the frequency of the disturbance $T_{ld}$, torque fluctuation may be caused in the motor 12 other than those suppressing the disturbance $T_{ld}$.

Accordingly, in order to suppress torque fluctuation of the motor 12 due to change in the value of the first coefficient $\alpha_2$ and the value of the second coefficient $\alpha_1$ in accordance with change in the frequency of the disturbance $T_{ld}$, the second coefficient $\alpha_1$ may be set as shown in the following Expression (16).

$$\alpha_1(t) = 2 \cdot \alpha/\omega(t) - \alpha_2(t) \cdot (d\omega(t)/dt)/\omega(t) \ ... \ (16)$$

where "t" is time. "w(t)" is the frequency at time t, which may vary over time. "$\alpha$" is the first parameter. "$\alpha_2(t)$" is the first coefficient of the compensator 34 at time t.

The second term on the right side of Expression (16), "$\alpha_2(t) \cdot (dw(t)/dt)/w(t)$", is a correction term for the second coefficient $\alpha_1$ of the compensator 34. The correction term is set based on the perspective of suppressing torque fluctuation of the motor 12 due to change in the value of the first coefficient $\alpha_2$ and the value of the second coefficient $\alpha_1$ of the compensator 34 in accordance with change in the frequency of the disturbance $T_{ld}$. When the frequency of the disturbance $T_{ld}$ does not change, i.e., when the angular velocity $\omega_m$ of the motor 12 is constant, the value of the correction term is "0". When the frequency of the disturbance $T_{ld}$ changes, i.e., when the angular velocity $\omega_m$ of the motor 12 changes, the correction term becomes a value other than "0", thereby correcting the value of the second coefficient $\alpha_1$.

In this way, the compensator 34 corrects the value of the second coefficient $\alpha_1$ in accordance with change in the frequency of the disturbance $T_{ld}$ in conjunction with change in the angular velocity $\omega_m$ of the motor 12. This enables torque fluctuations of the motor 12 other than those for suppressing the disturbance $T_{ld}$, due to changing the values of the coefficients ($\alpha_1$, $\alpha_2$) of the compensator 34 in accordance with change in the frequency of the disturbance $T_{ld}$, to be suppressed.

<Effects of Second Embodiment>

The second embodiment has the following effects in addition to the effects in sections (1-1) to (1-6) of the first embodiment described above.

(2-1) The compensator 34 changes the value of the first coefficient $\alpha_2$, which is the coefficient of the second-order differential term of the second-order differential equation representing the compensator 34, and the value of the second coefficient $\alpha_1$, which is the coefficient of the first-order differential term, in accordance with change in the angular velocity $\omega_m$ of the motor 12, and hence, in accordance with change in the frequency of the disturbance $T_{ld}$. This enables compensation for the effects of the disturbance $T_{ld}$ over a broader frequency range. That is to say, even when the center frequency $f_c$ of the disturbance $T_{ld}$ to be eliminated fluctuates, the disturbance $T_{ld}$ having the center frequency $f_c$ that is fluctuating can be eliminated with pinpoint precision.

(2-2) When the angular velocity $\omega_m$ of the motor 12 changes, the compensator 34 corrects the value of the second coefficient $\alpha_1$ in order to suppress torque fluctuations of the motor 12 due to change in the value of the first coefficient $\alpha_2$ and the value of the second coefficient $\alpha_1$. The compensator 34 corrects the value of the second coefficient $\alpha_1$ in accordance with change in the frequency of the disturbance $T_{ld}$ in conjunction with change in the angular velocity $\omega_m$ of the motor 12. This enables torque fluctuations of the motor 12 other than those for suppressing the disturbance $T_{ld}$, due to changing the values of the coefficients ($\alpha_1$, $\alpha_2$) of the compensator 34 in accordance with change in the frequency of the disturbance $T_{ld}$, to be suppressed. Accordingly, even when the values of the coefficients ($\alpha_1$, $\alpha_2$) of the compensator 34 are changed in accordance with change in the frequency of the disturbance $T_{ld}$, the effects of the disturbance $T_{ld}$ can be compensated for as appropriate.

<Other Embodiments>

The present embodiment may be carried out modified as follows.

- As indicated by the long dashed double-short dashed lines in FIG. 2, the disturbance observer unit 33 may have a disturbance feedback controller 33D and an adder 33E. The disturbance feedback controller 33D takes in the differential value $dT_{ld}{}^{\wedge}$ of the estimated disturbance $T_{ld}{}^{\wedge}$ calculated by the estimator 33A, and calculates a third correction value $I_{c3}$ based on the differential value $dT_{ld}{}^{\wedge}$ of the estimated disturbance $T_{ld}{}^{\wedge}$ that is taken in. The third correction value $I_{c3}$ is a current value corresponding to the estimated disturbance $T_{ld}{}^{\wedge}$ which is the difference between the actual motor output and the estimated motor output. The adder 33E calculates the final current command value I* by adding the third correction value $I_{c3}$ to the current command value I* obtained after the effects of the disturbance $_{ld}$ are compensated for. The feedback calculation unit 32 performs feedback control of the current supplied to the motor 12 based on the final current command value I*. Thus, the value of the current supplied to the motor 12 tracks the current command value I* more quickly.

- In a case in which the mechanical device 13 is a steering system of a vehicle, and the motor 12 is an assisting motor or a reaction motor, the disturbance observer unit 33 may be configured as follows. That is to say, the disturbance observer unit 33 may stop disturbance compensation control, which is control for compensating for the effects of the disturbance $T_{ld}$, in a case of a state in which vibrations due to torque ripple of the motor 12 are unlikely to appear in the steering system. For example, vibrations due to torque ripple are easily conveyed to the steering system when the vehicle speed is an extremely low speed. Accordingly, the disturbance observer unit 33 may stop the disturbance compensation control when a value of the vehicle speed exceeds a vehicle speed threshold value. The speed threshold value is a reference for determining whether the vehicle speed is an extremely low speed. Also, vibrations due to torque ripple are easily conveyed to the steering system when the angular velocity $\omega_m$ of the motor 12 is extremely slow. Accordingly, the disturbance observer unit 33 may stop the disturbance compensation control when the value of the angular velocity $\omega_m$ exceeds an angular velocity threshold value. The angular velocity threshold value is a reference for when determining whether the angular velocity $\omega_m$ of the motor 12 is extremely slow. The angular velocity $\omega_m$ of the motor 12 reflects the steering speed of the steering wheel.

- The motor control device 11 may have a function of detecting an abnormality in itself, an abnormality in the motor 12, or an abnormality in the mechanical device 13. In this case, the disturbance observer unit 33 may stop the disturbance compensation control when an abnormality in the motor control device 11, the motor 12, or the mechanical device 13, is detected. Executing compensation control when an abnormality is detected in the motor control device 11, the motor 12, or the mechanical device 13, is meaningless.

- The command value calculation unit 31 may be configured as follows. That is to say, an arrangement may be made in which the command value calculation unit 31 calculates a torque command value based on the state variable $S_{SV}$ indicating a state of the mechanical device 13, and calculates the current command value I* based on this torque command value that is calculated. The torque command value is torque that the motor 12 is to be caused to generate. In this case, the estimator 33A takes in the torque command value and the angular velocity $\omega_m$ of the motor 12, which is the output of the plant P. The estimator 33A calculates the differential value $dT_{ld}{}^{\wedge}$ of the estimated disturbance $T_{ld}{}^{\wedge}$ based on the torque command value and the angular velocity $\omega_m$ of the motor 12. The multiplier 33B calculates a torque correction value by multiplying the differential value $dT_{ld}{}^{\wedge}$ of the estimated disturbance $T_{ld}{}^{\wedge}$ by a predetermined gain. The torque correction value is a correction value for the torque command value. The subtractor 33C corrects the torque command value by subtracting the torque correction value from the torque command value. In this arrangement as well, the effects of the disturbance $T_{ld}$ having the frequency that is the object of suppression can be compensated for.

- The disturbance observer unit 33 may be configured as follows. That is to say, the disturbance observer unit 33 may calculate the difference between the rotation angle $\theta$ of the motor 12 obtained as the output of the plant P and the estimated rotation angle of the motor 12 obtained as the output of the nominal plant Pn, and compensate for the effects of the disturbance $T_{ld}$ based on the difference value that is calculated in this way. The rotation angle $\theta$ of the motor 12 is rotation information of the motor 12.

- The mechanical device 13 is not limited to being a vehicle steering system. The mechanical device 13 may be a machine tool driven by a motor, for example.

**Claims**

1. A motor control device, comprising:

   a command value calculation unit configured to calculate a command value for controlling a motor of a mechanical device; and
   a disturbance observer unit configured to estimate a disturbance applied to the mechanical device, based on the command value and rotation information of the motor, and to correct the command value based on the disturbance that is estimated, wherein
   the disturbance observer unit has a parameter that is adjusted to compensate for effects of the disturbance having a specific frequency that is an object of suppression,
   the disturbance that is applied to the mechanical device, after the effects of the disturbance have been compensated for, is a post-compensation disturbance,
   the parameter is adjusted such that the post-compensation disturbance has frequency characteristics corresponding to antiresonance characteristics of the mechanical device, and
   the disturbance observer unit is configured to change a value of the parameter in accordance with the rotation information of the motor.

2. The motor control device according to claim 1, wherein the rotation information of the motor is an angular velocity of the motor.

3. The motor control device according to claim 2, wherein:

   the parameter includes a gain; and
   the disturbance observer unit is configured to

      calculate a differential value of the disturbance based on the command value and the angular velocity of the motor, and
      calculate a first correction value for the command value by multiplying, by the gain, the differential value of the disturbance that is calculated.

4. The motor control device according to claim 3, wherein:

   the parameter further includes a first observer gain and a second observer gain;
   with "J" as an inertia coefficient of the mechanical device, "C" as a viscosity coefficient of the mechanical device, "s" as a Laplace operator, "L1" as the first observer gain, "L2" as the second observer gain, and "β" as the gain, the post-compensation disturbance has conveyance characteristics expressed by the following Expression (A) $\{Js^2 + (-L2 \cdot \beta + L1 \cdot J)s + L2\}/\{Js^2 + (-L2 \cdot C + L1 \cdot J)s + L2\} \cdot Js \ldots$ (A); and

the disturbance observer unit is configured to correct a value of the first observer gain when the angular velocity of the motor changes, in order to suppress torque fluctuations of the motor due to change in the value of the parameter.

5. The motor control device according to claim 4, wherein a value of the gain "$\beta$" is adjusted such that a value of the second term in the numerator of the Expression (A) is zero or close to zero.

6. The motor control device according to any one of claims 3 to 5, wherein:

the mechanical device is configured to also operate due to torque being applied externally;
the motor control device further includes

a compensator configured to calculate a compensation amount for compensating for the effects of the disturbance in accordance with a differential value of torque externally applied to the mechanical device, and
a multiplier that calculates a second correction value for the command value by multiplying the compensation amount by the gain; and

the compensator is configured to change a value of a first coefficient, which is a coefficient of a second-order differential term of a second-order differential equation representing the compensator, and a value of a second coefficient, which is a coefficient of a first-order differential term, in accordance with the rotation information of the motor.

7. The motor control device according to claim 6, wherein the compensator is configured to correct the value of the second coefficient to suppress torque fluctuations of the motor due to change in the value of the first coefficient and the value of the second coefficient when the angular velocity of the motor changes.

8. The motor control device according to any one of claims 2 to 7, wherein the disturbance observer is configured to

calculate the differential value of the disturbance based on the command value and the angular velocity of the motor, and
calculate a third correction value for the command value based on the differential value of the disturbance that is calculated.

9. The motor control device according to any one of claims 1 to 8, wherein:

the mechanical device is a steering system of a vehicle; and
the motor generates torque that is applied to the steering system.

## Fig.1

## Fig.2

Fig.3

FREQUENCY

0

x

f c

$W_n$

$D_n$

$T_{ld}$
(AFTER DISTURBANCE
COMPENSATION)

GAIN

## INTERNATIONAL SEARCH REPORT

International application No.

**PCT/JP2022/012011**

### A.　CLASSIFICATION OF SUBJECT MATTER

*H02P 23/04*(2006.01)i
FI:　H02P23/04

According to International Patent Classification (IPC) or to both national classification and IPC

### B.　FIELDS SEARCHED

Minimum documentation searched (classification system followed by classification symbols)

H02P23/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C.　DOCUMENTS CONSIDERED TO BE RELEVANT

| Category* | Citation of document, with indication, where appropriate, of the relevant passages | Relevant to claim No. |
|---|---|---|
| X | JP 3-235687 A (MITSUBISHI ELECTRIC CORP.) 21 October 1991 (1991-10-21) page 4, upper right column, line 10 to lower right column, line 1, page 9, lower left column, line 19 to page 10, upper left column, line 12, fig. 5 | 1, 2, 9 |
| Y |  | 1, 2, 9 |
| A |  | 3-8 |
| Y | JP 3-17703 A (FANUC LTD.) 25 January 1991 (1991-01-25) page 1, lower right column, line 15 to page 4, lower left column, line 9, fig. 1-2 | 1, 2, 9 |

☐ Further documents are listed in the continuation of Box C.　☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 09 May 2022 | 24 May 2022 |

| Name and mailing address of the ISA/JP | Authorized officer |
|---|---|
| Japan Patent Office (ISA/JP) 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**
Information on patent family members

International application No.

**PCT/JP2022/012011**

| Patent document cited in search report | | | Publication date (day/month/year) | Patent family member(s) | Publication date (day/month/year) |
|---|---|---|---|---|---|
| JP | 3-235687 | A | 21 October 1991 | (Family: none) | |
| JP | 3-17703 | A | 25 January 1991 | EP 433461 A1 page 2, line 1 to page 4, line 50, fig. 1-3 KR 10-1992-0700422 A CA 2033098 A1 WO 1990/016020 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004224129 A